# EUROPÄISCHE PATENTSCHRIFT

(11) **EP 1 316 407 B1**
(45) Veröffentlichungstag und Bekanntmachung des Hinweises auf die Patenterteilung: **01.03.2006**
(21) Anmeldenummer: 02026656.5
(22) Anmeldetag: 29.11.2002
(51) Int. Cl.: B29C 47/20, E04C 2/54, B29D 24/00

(54) **Plattenförmiges Wand- oder Dachelement sowie ein Verfahren und Werkzeug zur Herstellung**
Wall- or roofpanel and method and extrusion die for manufacturing the same
Panneau pour des murs et des toits et procedé et dispositif de production

(30) Priorität: 30.11.2001 DE 20119426 U; 30.11.2001 DE 20119427 U; 09.08.2002 DE 10237087
(43) Veröffentlichungstag der Anmeldung: 04.06.2003
(73) Patentinhaber: Rodeca GmbH, 45438 Mülheim-Ruhr (DE)
(72) Erfinder: Conterno, Alexander, 45468 Mülheim Ruhr (DE); Schneider, Rolf, 45478 Mülheim-Ruhr (DE)
(74) Vertreter: Menges, Rolf

(56) Entgegenhaltungen:
- EP-A- 0 874 095
- EP-A- 0 933 489
- DE-A- 1 504 800
- FR-A- 2 213 847
- GB-A- 2 061 354
- US-A- 4 443 987
- US-A- 4 513 048
- US-A- 5 972 475

## Beschreibung

Die Erfindung betrifft ein Verfahren und ein Werkzeug zur Herstellung eines plattenförmigen Wand- oder Dachelementes aus stranggepressten, insbesondere teilweise lichtdurchlässigem, Kunststoff, welches aus mindestens zwei mit Abstand zueinander angeordneten und durch mehrere Stege miteinander verbundenen Schalen besteht, mit Hilfe eines Strangpresswerkzeuges, dessen Düsenlippe ein dem Querschnitt des Wand- oder Dachelementes entsprechendes Profil aufweist, wobei einzelne Profilabschnitte durch einen Schlitz der Düsenlippe gebildet werden sowie ein plattenförmiges Wand- oder Dachelement.

Plattenförmige Wand- oder Dachelemente der gattungsgemäßen Art werden als Fassadenelemente oder zum Verkleiden von Gebäuden, beispielsweise Fabrikhallen oder Sporthallen und Industriegebäuden, eingesetzt oder in einer transparenten Ausführung bevorzugt als Dachelemente verwendet, um eine Ausleuchtung mit Tageslicht der darunter befindlichen Räume zu ermöglichen, beispielsweise für Shed-, Satteldächer und Überdachungen. Des Weiteren eignen sich die Wand- oder Dachelemente für Wintergärten, Carports oder eine Pergola. Es sind unterschiedliche Formen von Hohlkammerplatten bekannt, die jedoch zumindest aus zwei Schalen mit querliegenden Verbindungsstegen bestehen. Für den Fall, das höhere Windlasten zu berücksichtigen sind, können die Hohlkammerplatten in verschiedenen Stärken hergestellt oder für eine verbesserte thermische Isolierung mehrere Schalen aufweisen. Die Anzahl der Schalen und Querstege hängt im Wesentlichen von dem zur Extrudierung vorgesehenen Werkzeug ab. Die Hohlkammerplatten werden bevorzugt in einer Breite von 20 bis 210 cm gefertigt, wobei mehrere Hohlkammerplatten nebeneinander liegend durch Befestigungsmittel zu einem Hohlkammersystem kombiniert werden können. Die Befestigung zweier nebeneinander liegender Hohlkammerplatten wird hierbei vorzugsweise durch eine Nut-Federverbindung als Befestigungsmittel vorgenommen, die beispielsweise aus einer angeformten, bauchigen Nut an einer Längskante der Hohlkammerplatte sowie einer korrespondierenden Ausnehmung auf der diametral gegenüber liegenden Längskante der Hohlkammerplatte besteht. Auf diese Weise ist es möglich eine beliebige Anzahl von Hohlkammerplatten nebeneinander zu befestigen und somit auch großflächige transparente Anordnung von Hohlkammerplatten zu schaffen. Im Randbereich der Hohlkammersysteme wird in der Regel ein Einfassprofil verwendet, welches einerseits den Randbereich der Hohlkammerplatte einfasst und umschließt und andererseits über angeformte und abgewinkelte Teilflächen mit dem Wand- oder Dachflächenunterbau verschraubt werden kann.

Ferner können auch einzelne Hohlkammerplatten verwendet werden, die keine Nut-Federverbindung aufweisen und lediglich durch Einfassprofile mit den Gebäudebestandteilen verbunden werden. Transparente Hohlkammerplatten werden vorzugsweise immer dort eingesetzt, wo eine Ausnutzung des Tageslichtes gewünscht wird. Es hat sich jedoch gezeigt, dass durch intensive Sonneneinstrahlung eine starke Erwärmung der Hohlkammerplatten und des dahinter befindlichen Raumes erfolgt. Um dem entgegen zu wirken werden bekannte Wand- oder Dachelemente auf ihrer Außenfläche ganzflächig mit einer dünnen Beschichtung oder Folie aus einem Kunststoff versehen, der beispielsweise UV-Licht oder Infrarot-Licht absorbierende Partikel enthält. Aufgrund der unterschiedlichen Ausdehnungskoeffizienten kann es jedoch zu Rissbildungen in der Folie kommen. Ferner sind die Folien nicht witterungsbeständig und es besteht keine Möglichkeit für den Transport eine Schutzfolie aufzubringen. Soweit die Sonneneinstrahlung hierdurch nicht in ausreichender Form verhindert werden kann, werden die Wand- oder Dachelemente gegebenenfalls mit einem Farbdruck versehen, der beispielsweise auf das fertige Wand- oder Dachelemente mittels einer Farbträgerfolie aufgedruckt wird. Für ein solches Druckverfahren wird eine zusätzliche Druckeinrichtung in einem weiteren Arbeitsschritt benötigt, die sehr aufwendig und teuer ist. Außerdem ist der Aufdruck in der Regel nicht witterungsbeständig. Als Alternative bieten sich nur außenliegende Beschattungsanlagen an, die ebenfalls sehr teuer sind.

Aus der EP 0 874 095 A2 ist es ferner bekannt, durch Koextrusion auf die Außen- und/oder Innenfläche wenigsten einer Hohlkammerscheibe eine Beschichtung aufzutragen oder gegebenenfalls einen Steg durch Druckerhöhung des zufließenden Beschichtungsmaterials in einem anderen Material auszubilden. Es kann durch die alleinige Druckerhöhung des zufließenden Materials jedoch keine zuverlässige Stegausformung gewährleistet werden, sodass sich das Verfahren nur für eine Oberflächengestaltung bewährt hat. Die gestalterischen Möglichkeiten sind begrenzt und erstrecken sich auf eine streifenförmige oder punktuelle Anordnung der zusätzlichen Beschichtung, wobei die Dimension in Breite und Punktform veränderbar ist.

In der EP 0 933 489 wird ein Hohlkammerprofil offenbart, dessen Stegplatten aus einem besonderen, vor allem opaken Material bestehen, was dazu führt, dass auf die Oberfläche der Hohlkammerplatten auftreffende Sonnenstrahlen nicht durch die Verbindungspunkte der Stegplatten mit den Außenschalen wie durch eine Linse gebündelt werden und längs durch die Stegplatte an die Unterseite der Hohlkammerplatte geleitet werden und dort in gebündelter Weise aus den Hohlkammerplatten wieder heraustreten. Diese ungewollte Führung des Lichtes führt zu punktuellen oder streifenförmigen Bündelungen des Lichtes und können so beispielweise Pflanzen schädigen, die in einem Gewächshaus aufgestellt sind, deren Oberlichter aus diesen Hohlkammerplatten bestehen. Die in der EP 0 933 489 offenbarten Hohlkammerscheiben mit opaken Stegplatten verhindern die linsenförmige Bündelung des Lichtes, sind aber aus gestalterischer Hinsicht weniger attraktiv und führen zu einer Schattenbildung.

Der Erfindung liegt die Aufgabe zugrunde, ein Verfahren und ein Werkzeug aufzuzeigen, mit welchem ein gattungsgemäßes Wand- oder Dachelement in einem vereinfachten Produktionsverfahren herstellbar ist und darüber hinaus vielfältige Gestaltungsmöglichkeit bietet.

Erfindungsgemäß ist zur Lösung der gestellten Aufgabe vorgesehen, dass mehrere unterschiedliche Kunststoffmaterialien dem Strangpresswerkzeug von der diametral gegenüberliegenden Seite der Düsenlippe getrennt zugeführt werden und ausgewählte Schlitze für Stege, Stegabschnitte und/oder Schalen mit den Kunststoffmaterialien versorgt werden, wobei die unterschiedlichen Kunststoffmaterialien in den Schlitzen der Düsenlippe zusammenfließen. Das erfindungsgemäße Verfahren zeigt somit einen Weg auf, bei dem in einem Arbeitsvorgang unterschiedlichste Materialien einsetzbar sind und wahlweise zur Herstellung von Stegen, Stegabschnitten oder Schalen verwendet werden. Die unterschiedlichen Kunststoffmaterialien werden hierbei dem Strangpresswerkzeug getrennt zugeführt und fließen erst über den Düsenkem in der Düsenlippe des Strangpresswerkzeuges zusammen, sodass die vorgenannten Stege, Stegabschnitte und/oder Schalen einer Hohlkammerscheibe oder Paneel vollflächig durchgefärbt oder aus einem anderen Material bestehen können. Die Anzahl der verwendeten Kunststoffmaterialien hängt von der Anzahl der eingesetzten Extruder ab und kann den jeweiligen Wünschen der Kunden weitestgehend angepasst werden, wobei eine hohe Flexibilität hinsichtlich der einsetzbaren Materialien und deren Anordnung innerhalb der vorhandenen Struktur der Hohlkammerscheibe oder Paneele möglich ist. Die Gestaltungsmöglichkeiten der Wand- oder Dachelemente erhöhen sich hierdurch wesentlich, sodass nahezu jeder spezielle Kundenwunsch innerhalb des Profilquerschnitts eines Wand- oder Dachelementes erfüllt werden kann. Sei es zur anspruchsvollen Gebäudeverkleidung oder Sonnenbeschattung oder zur Ausbildung von bestimmten Oberflächenmustern, die zu einer qualitativen Verbesserung des Produktes führen. Ein besonderer Vorteil des aufgezeigten Verfahrens besteht darin, dass durch die getrennte Zuführung der Kunststoffmaterialien auf die Eigenschaften der verwendeten Materialien besser eingegangen werden kann und eine somit wesentlich verbesserte Verarbeitung mit höherer Maßhaltigkeit möglich ist, wobei die Zuführung der Materialien unter annähernd gleichen Drücken geschieht, sodass die Handhabung wesentlich erleichtert wird. Gegenüber herkömmlichen, bekannten Ausführungen zeichnen sich die hergestellten Wand- oder Dachelemente durch ihre den Bedürfnissen angepasste Erscheinungsform aus und besitzen gegenüber den bekannten Oberflächenbeschichtungen den Vorteil, dass Oberflächenbeschädigungen nicht sofort zu einer Zerstörung der vorhandenen Struktur führen, sondern aufgrund des durchgefärbten beziehungsweise vollwandig ausgebildeten Kunststoffmaterials kaum wahrgenommen werden.

Die Zuführung der unterschiedlichen Kunststoffmaterialien wird hierbei über eine entsprechende Anzahl von Extrudern vorgenommen, die unmittelbar mit dem Strangpresswerkzeug verbunden werden und gleichartige, beispielsweise vertikale, horizontale oder diagonale Schlitze, mit identischen Kunststoffmaterialien auffüllen, die untereinander kompatibel sind. Zu diesem Zweck sind die Schlitze untereinander, beispielsweise durch Verbindungs- oder Verteilungskanäle, verbunden und werden durch jeweils einen Extruder versorgt. Über eine Strömungsregulierung kann hierbei die Wandstärke der Stege und Schalen des extrudierten Materials in den Schlitzen beeinflusst werden und entsprechend der vorliegenden Wandstärken so individuell eingestellt werden, dass nur die gewünschten Stegabschnitte von einem gegenüber den sonstigen Materialien abweichenden Kunststoffmaterial versorgt werden. Hierbei besteht insbesondere die Möglichkeit, dass die Schalen und/oder Stege teilweise aus einer UV-Licht oder Infrarot-Licht absorbierenden Kunststoffmasse geformt werden oder das lumineszierende oder phosphoreszierende Stoffe der Kunststoffmasse zugesetzt werden. Weiterhin können nicht nur lichttechnische, sondern auch feuertechnische/brandhemmende Eigenschaften durch entsprechende Materialauswahl erreicht werden. Weitere Möglichkeiten bestehen durch antistatische, phototropische Effekte, wasserleitende Strukturen und einer verbesserten Chemikalienbeständigkeit.

Zur Anwendung des erfindungsgemäßen Verfahrens wird ferner ein Strangpresswerkzeug vorgeschlagen, welches aus einem Düsenkopf mit einer Düsenlippe besteht, die ein dem Querschnitt des Wand- oder Dachelementes entsprechendes Profil aufweist, wobei einzelne Profilabschnitte durch einen Schlitz der Düsenlippe herstellbar sind und erfindungsgemäß vorgesehen ist, dass ausgewählte Schlitze für Stege, Stegabschnitte und/oder Schalen im Düsenkern untereinander verbunden und von zumindest einem weiteren Extruder beaufschlagbar sind, wobei Kunststoffmaterialien aus verschiedenen Extrudern im Strangpresswerkzeug von der der Düsenlippe gegenüberliegenden Seite getrennt zuführbar sind und die Kunststoffmaterialien in den Schlitzen oder Düsenlippe zusammenfließen. Vorzugsweise werden an das Strangpresswerk zeug mehrere Extruder angeschlossen und über Verteilungskanäle gleiche oder gleichartige Schlitze/Schalen mit Kunststoffmaterialien versorgt, wobei Verbindungskanäle die Zuführung der Kunststoffmaterialien zu den Verteilungskanälen beziehungsweise Schlitze/Schalen ermöglichen. Die Anzahl der verwendeten Extruder wird hierbei lediglich durch die geometrische Anordnung gegenüber dem Düsenkopf begrenzt, wobei durch die direkte Versorgung einzelner Schlitze/Schalen des Düsenkopfes den Variationsmöglichkeiten keine Grenzen gesetzt sind. Hierbei werden die unterschiedlichen Kunststoffmaterialien aus den verschiedenen Extrudern dem Düsenkopf jeweils getrennt zugeführt und fließen in den Schlitzen der Düsenlippe in derart zusammen, dass entweder einzelne Stege, Stegabschnitte oder Schalen aus einem unterschiedlichen Kunststoffmaterial gebildet werden. Zur Regulierung der Fließgeschwindigkeit des extrudierten Kunststoffmaterials in den Verbindungs- und Verteilungskanälen und den Schlitzen, zur Ausbildung unterschiedlicher Stege oder Wandstärken ist in vorteilhafter Weise vorgesehen, dass die Strömung der Kunststoffmaterialien von den Extrudern zu der Düsenlippe jeweils durch eine Strömungsregulierung beeinflusst werden kann. Diese Maßnahme ist besonders wichtig, wenn die Steg- und Schalendicke variiert und unterschiedliche Füllmengen für die einzelnen Schlitze benötigt werden. Ferner kann durch eine Strömungsregulierung die Maßhaltigkeit des einfließenden Kunststoffmaterials in die jeweiligen Schlitze voreingestellt und verändert werden, sodass die gewünschten Strukturen auch bei einem längeren Produktionsprozess mit einem hohen Qualitätstandart eingehalten werden können. Durch eine Variation der Steg- oder Schalendicke wird zudem eine Farbveränderung erzielt, die gestalterisch eingesetzt werden kann. Der den Extrudern zugeordnete Düsenkopf besitzt eine Düsenlippe, welche durch Schlitze ein dem Wand- oder Dachelement entsprechendes Profil ausbildet und mit nebeneinanderliegenden in das Profil mündenden Verbindungskanälen eines Düsenkerns verbunden sind, wobei die Verbindungskanäle und/oder Verteilungskanäle- unmittelbarer Bestandteil des Düsenkerns sind. Zur Beeinflussung der Strömungsgeschwindigkeit und Berücksichtigung der Eigenschaften der unterschiedlichen Kunststoffmaterialien ist ferner vorgesehen, dass die Schmelzkanäle, Verbindungskanäle und/oder Verteilungskanäle durch Temperatur oder durch Staubalken, Lippen oder Extrusionsgeschwindigkeit gesteuert sind, wobei die jeweilige Steuerung gegebenenfalls für die unterschiedlichen Kunststoffmaterialien getrennt einstellbar ist. Durch geringe Druckvariation der zugeführten Kunststoffmaterialien kann die Ausbildung der Hohlkammerscheiben oder Paneele zusätzlich beeinflusst werden.

Der Erfindung liegt ferner die Aufgabe zugrunde, ein neuartiges Wand- oder Dachelement aufzuzeigen, dass aus stranggepressten Kunststoffmaterial hergestellt wird und eine verbesserte Strukturgestaltung sowie eine Reduzierung der Wärmeeinstrahlung in die Paneele und den darunter befindlichen Räumen ermöglicht. Eine weitere Aufgabe besteht darin, ein besseres Brandverhalten und ein vielfältiges Design der Paneele zu ermöglichen.

Erfindungsgemäß ist zur Lösung der Aufgabenstellung vorgesehen, dass die ausgebildeten Stege, Stegabschnitte und Schalen vollflächig durchgefärbt und aus unterschiedlichen Kunststoffmaterialien bestehen, welche getrennt durch Extruder von der diametral gegenüberliegenden Rückseite der Düsenlippe zuführbar sind.

Durch die Ausbildung einer Struktur oder Einfärbung zumindest einer Schale, kann in erheblichem Maße Einfluss auf den Reflektions- oder Transmissionsgrad der Hohlkammerplatte oder Paneele genommen werden. Hierbei besteht die Möglichkeit, dass wahlweise eine der außen liegenden Schalen und/oder zumindest eine mittige Schale eine Abweichung in der Struktur und/oder der Einfärbung aufweist. Soweit die außen liegende Schale hierzu verwendet wird, besteht die Möglichkeit eine Reflektion von vorzugsweise Infrarotstrahlung zu erzielen, sodass eine wesentlich geringere Wärmbelastung der überdachten Flächen oder Räume möglich ist. Die Reflektion kann jedoch auch an einer innenliegenden Schale ausgebildet sein, um die Raumwärme im Gebäude zu halten. Durch eine vollflächige oder partielle Durchfärbung oder Verwendung anderer Kunststoffmaterialien zur Ausbildung der Stege, Stegabschnitte oder Schalen kann hierbei eine optisch ansprechende Außenfläche geschaffen werden, die in mehrfachen Farbkombinationen nebeneinander eingesetzt, bei einem Gebäude oder einer Wandfläche eine individuelle Farbgestaltung ermöglicht. Werden hingegen innenliegende Schalen zur Einfärbung oder einer Strukturbildung ausgewählt, können besondere Lichteffekte beispielsweise 3-D Effekt erzielt werden, die in Abhängigkeit von der Sonneneinstrahlung unterschiedliche Farbspiegelungen ergeben. Hierbei kann es sich um eine oder mehrere der mittleren Schalen oder um die dem Gebäude zugewandte innere Schale der Hohlkammerscheibe oder Paneele handeln. Ferner besteht die Möglichkeit eine Einfärbung oder abweichende Struktur in den Quer- oder Diagonalstegen vorzunehmen, wodurch die Gestaltungsmöglichkeiten weiter erhöht werden können und beispielsweise ein jalousienartiger Effekt entsteht. Durch die Zugabe von lumineszierenden oder phosphoreszierenden Stoffen oder weiteren Stoffen, die eine Farbveränderung infolge der Einwirkung von infraroter- oder ultravioletter Strahlung hervorrufen, kann die Gestaltungsmöglichkeit weiter erhöht werden.

Die Hohlkammerplatten, Hohlkammerscheiben oder Paneele weisen mehrere vorzugsweise zwei bis sechs übereinanderliegende Schalen auf, die durch Stege einstückig miteinander verbunden sind, sodass in Abhängigkeit der gewünschten Effekte oder des Reflektions- oder Transmissionsgrad eine der vorhandenen Schalen zur farblichen Ausgestaltung ausgewählt werden kann. Die Herstellung der Hohlkammerplatte oder Paneele und die der Struktur und der Einfärbung erfolgt hierbei bereits während des Extrudiervorgangs, sodass in vorteilhafter Weise keine weiteren Arbeitsschritte notwendig sind, um derartige Hohlkammerscheiben oder Paneele herzustellen. Hierbei werden zur Einfärbung der Schalen vorzugsweise Farbpigmente eingesetzt, welche beispielsweise zur Reflektion der Infrarotstrahlen geeignet sind. Durch eine derartige Infrarotschicht können bis zu 60% der Infrarotstrahlen reflektiert werden, sodass eine wesentlich geringere Wärmeeinstrahlung als bei normalen Hohlkammerplatten oder Paneele bzw. Hohlkammerscheiben erfolgt. Hierdurch ergibt sich beispielsweise die Funktion einer von der Innenseite her kühl wirkenden Optik, während hingegen auf der Außenseite eine optisch ansprechende Oberfläche geschaffen wird. Der besondere Vorteil ist darin zu sehen, dass keine zusätzlichen Schattierungsmaßnahmen, beispielsweise Markisen, Rollladen oder ähnliches notwendig sind.

In Ausgestaltung der Erfindung ist vorgesehen, dass die zumindest eine Schale vollflächig durchgefärbt ist, sodass auch bei kleineren Oberflächenschäden die Wirkung der eingefärbten Schale nicht verloren geht.

Alternativ besteht die Möglichkeit, dass die Oberfläche zumindest einer Schale durch die Zugabe von Strukturmitteln zum Grundmaterial verändert werden kann, wobei die Oberfläche zur einer oder beiden Seiten der Schale eine feinporige aufgerauhte Fläche aufweisen kann. Soweit die Strukturmittel den inneren Schalen zugegeben werden, wird der wesentliche Effekt erzielt, dass das Entstehen des Kondensat in den inneren aus den Schalen und Stegen gebildeten Kammern aufgrund des verbesserten Perleffektes zu keiner großen Tropfenbildung führt, sondern lediglich kleinere Tröpfchen entstehen, die sehr schnell abfließen können und damit nicht zu einer Eintrübung der Hohlkammerplatten oder Paneele führen. Durch die Zugabe des Strukturmittels kann zumindest auf einer Oberflächenseite der Schale gegebenenfalls auf beiden Seiten eine sehr feinporige Aufrauhung erzielt werden, die bei der Verwendung auf der äußeren Schale beispielsweise zu einem schnellen Ablaufen von Regenwasser führt. Des Weiteren besteht die Möglichkeit, dass durch die Zugabe von Strukturmitteln und Farbpigmenten besondere Gestaltungen, beispielsweise einer marmorartigen oder perlmutfarbigen Oberflächenstruktur erzielt wird, die besonders bei der Verkleidung von Gebäuden zur Verschönerung eingesetzt werden kann.

Der besondere Vorteil der Erfindung liegt darin, durch das angegebene Verfahren und Werkzeug eine individuell gefertigte Hohlkammerplatte oder Paneele zu schaffen, die in ihrer Materialzusammensetzung variiert und trotzdem in einem Arbeitsvorgang kostengünstig herstellbar ist. Eine Gestaltung der Hohlkammerplatte oder Paneele kann hierbei auf einzelne Stege oder eine Anzahl nebeneinander liegender Stege beschränkt werden. Es können aber auch einzelne Schalen unterschiedlich ausgebildet werden. Die Kombination von unterschiedlichen Materialien bei einer Hohlkammerplatte oder Paneele führt somit zu einer hohen Flexibilität und erhöht die Gestaltungsmöglichkeit in vielfältiger Form. Für den Fall das entsprechende Farbpigmente den Schalen zugegeben werden, können beispielsweise Infrarot- und/oder UV-Strahlen in erhöhtem Maße reflektiert werden, sodass eine geringere Wärmeeinstrahlung oder UV-Belastung erfolgt und damit die Wärmebelastung der überdachten Flächen oder Räume soweit herabgesetzt wird, dass keine weiteren Schattierungsmaßnahmen erforderlich sind.

Die Erfindung wird im Weiteren anhand der Figuren näher erläutert.

Es zeigt
- Fig. 1: eine geschnittene Seitenansicht eines erfindungsgemäßen Düsenkopfes,
- Fig. 1A: eine verkleinerte Seitenansicht gemäß Figur 1 und einer Draufsicht in einer Ausschnittvergrößerung,
- Fig. 2: eine weitere geschnittene Seitenansicht eines erfindungsgemäßen Düsenkopfes,
- Fig. 2A: eine verkleinerte Seitenansicht gemäß Figur 2 und eine Draufsicht in einer Ausschnittvergrößerung,
- Fig. 3: in einer vergrößerten Darstellung eine Hohlkammerscheibe mit einem extrudierten Profil in einer erfindungsgemäßen Ausführung,
- Fig. 4: eine weitere Ausführung einer Hohlkammerscheibe mit einer X-Struktur,
- Fig. 5: eine weitere Ausführung einer Hohlkammerscheibe mit einer Y-Struktur,
- Fig. 6: eine weitere Ausführung einer Hohlkammerscheibe mit einer rechteckförmigen Struktur,
- Fig. 7: eine weitere Ausführung einer Hohlkammerscheibe mit einer weiteren rechteckförmigen Struktur,
- Fig. 8: eine weitere Ausführung einer Hohlkammerscheibe mit einer zusätzlichen V-Struktur und
- Fig. 9: eine Ausführung gemäß Figur 7, bei der die V-Struktur in der Mitte ausgebildet ist, während die benachbarten Kammern eine Diagonalstruktur aufweisen.

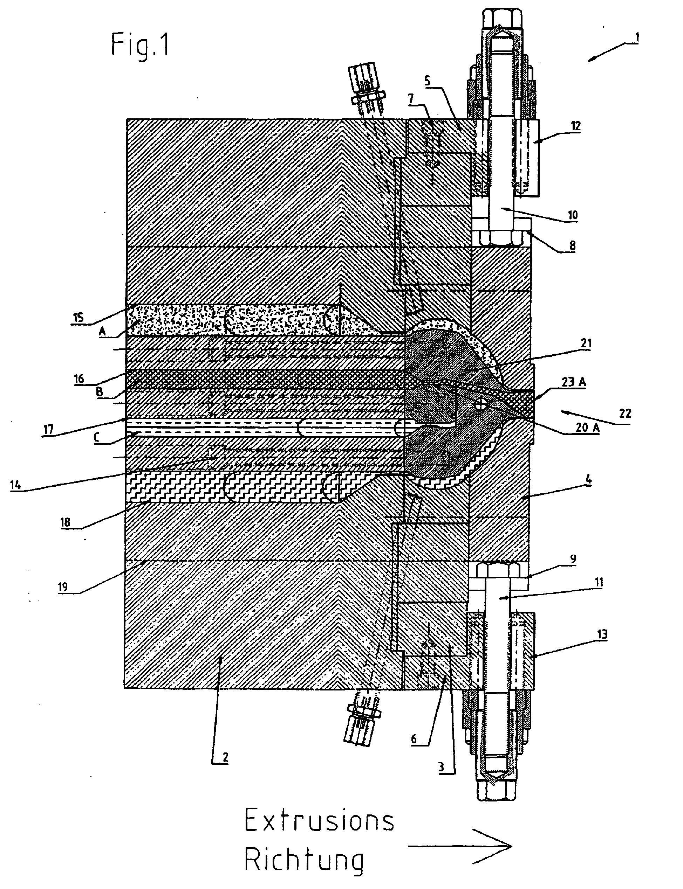

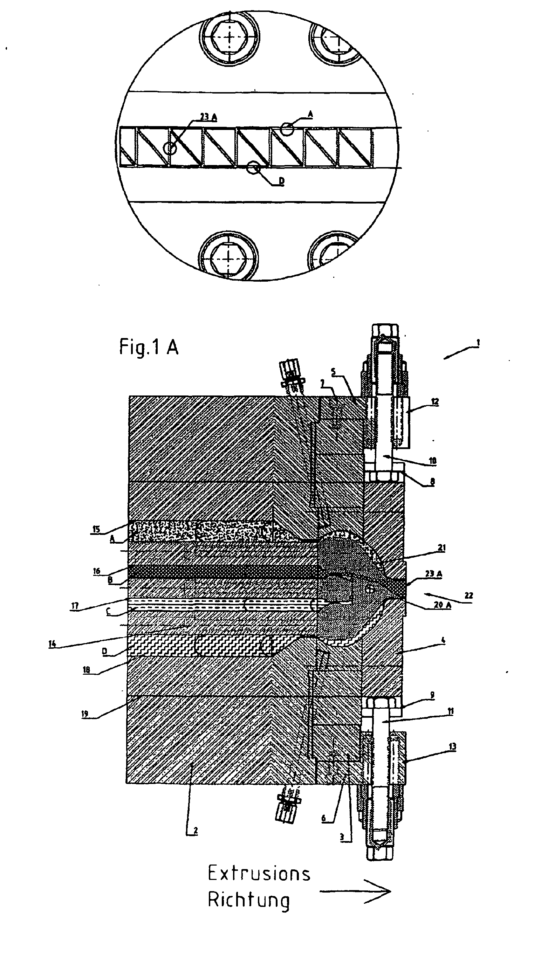

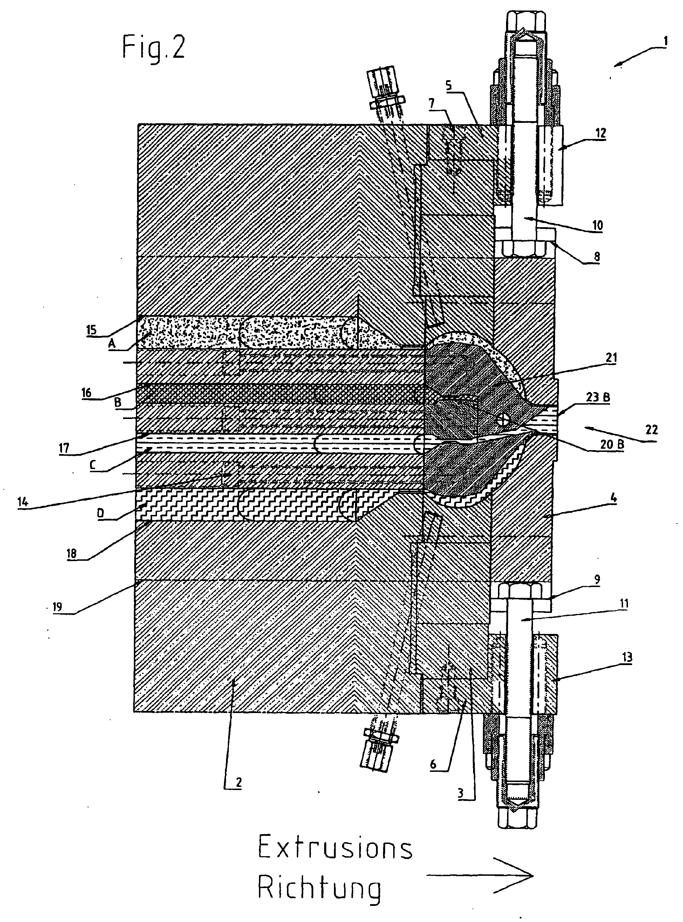

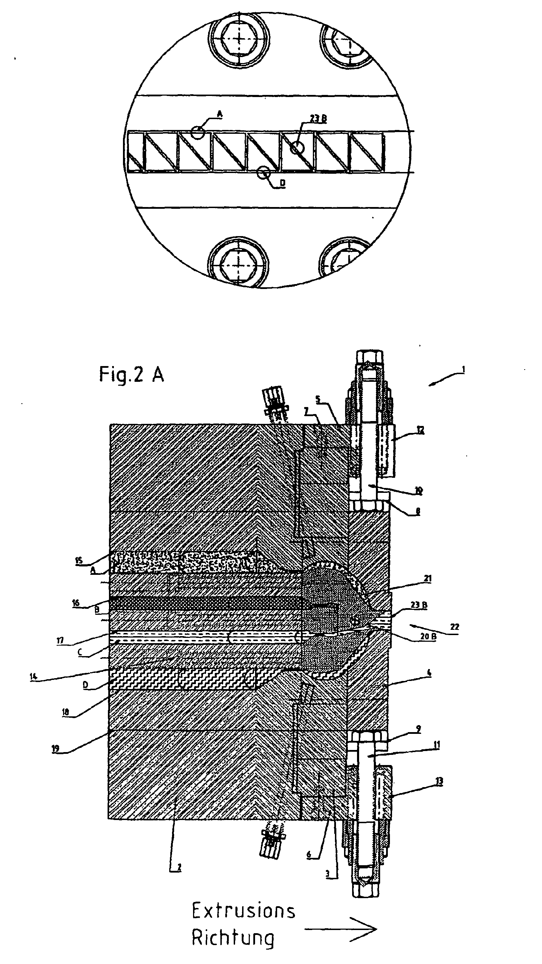

Die Figuren 1, 1A und 2, 2A zeigen in jeweils einer geschnittenen Seitenansicht einen Düsenkopf 1, der aus einem Düsenkörper 2, einem Flanschansatz 3 sowie einer Düsenlippe 4 und einem Düsenkem 21 besteht. Die Düsenlippe 4 ist über einen unteren und oberen Anschlussflansch 5, 6 mit dem Flanschansatz 3 über mehrere auf der Gesamtlänge verteilte Befestigungsbolzen 7 verbunden, wobei die Düsenlippe 4 über mehrere in einer Nut 8, 9 einliegende Einstellschrauben 10, 11 mit einem Flanschansatz 12, 13 des Anschlussflansches 5, 6 verschraubt sind. Hierdurch werden die Düsenlippen 4 gegenüber dem Flanschansatz 3 in einer festgelegten Position gehalten. Der Flanschansatz 3 wird durch weitere Befestigungsbolzen 14 mit dem Düsenkörper 2 verbunden. Ein Düsenkem 21 wird durch mehrere Befestigungsbolzen 19 mit dem Düsenkörper 2 verschraubt. Der Düsenkörper 2 ist ferner durch mehrere Befestigungsbolzen 24 mit dem Flanschansatz 3 verbunden.

Im Düsenkörper 2 sind mehrere, in dem gezeigten Ausführungsbeispiel vier Kanäle 15, 16, 17, 18 ausgebildet, die einen teilweise voneinander abweichenden Querschnitt aufweisen. Die Kanäle 15, 16, 17, 18 werden durch Wandungen des Düsenkörpers 2 gebildet und dienen jeweils zur Aufnahme einer Schmelze A, B, C, D, die jeweils von einem nicht dargestellten Extruder unter Druck dem Düsenkörper 2 zugeführt werden, wobei die unterschiedlichen Schmelzen A, B, C, D durch eine voneinander abweichende Straffierungen gekennzeichnet sind. Die Kanäle 15, 16, 17, 18 sind jeweils mit der zugeführten Schmelze A, B, C, D innerhalb des Düsenkörpers 2 aufgefüllt, wobei über jeweils einen Verbindungskanal, in Figur 1 der Kanal 20A und in Figur 2 der Kanal 20B, die Schmelze B beziehungsweise C über den Düsenkem 21 bis in den Austrittsbereich 22 der Düsenlippe 4 gelangt. In der Düsenlippe 4 sind die einzelnen Schlitze zur Erzeugung eines Schalen- oder Stegabschnitts der Hohlkammerplatte ausgebildet. Figur 1 und 1 A zeigt beispielsweise einen Schlitz 23A zur Erzeugung eines Querstegs, wie aus der Draufsicht der Figur 1A ersichtlich. Figur 2 und 2A zeigt demgegenüber in einer anderen Schnittebene einen Schlitz 23B zur Erzeugung eines Diagonalsteges, wie aus der Draufsicht der Figur 2A ersichtlich. Für andere Plattenabschnitte sind weitere aus dieser Schnittzeichnung nicht ersichtliche Schlitze vorhanden. Die weiteren Schlitze sind über weitere Verbindungskanäle mit den anderen Kanälen 15, 17, 18 verbunden, sodass die einzelnen Schmelzen A, B, C, D jeweils über getrennte Verbindungskanäle der Düsenlippe 4 und damit den ausgebildeten Schlitzen zugeleitet werden. Die einzelnen Verbindungskanäle 20 sind hierbei nebeneinander liegend im Düsenkern 21 ausgebildet, sodass abschnittsweise sämtliche der Schlitze mit Schmelzen A, B, C, D versorgt werden können. Soweit mehrere gleichartige Schlitze mit ein- und derselben Schmelze A, B, C, D versorgt werden sollen, können weitere längsverlaufende Verteilungskanäle im Düsenkern 21 ausgebildet sein, sodass über einen einzelnen Extruder die gleichartigen Schlitze einer Hohlkammerscheibe versorgt werden können.

Je nach verwendeten Kunststoffmaterial wird die Geometrie der Kanäle 15, 16, 17, 18 angepasst, wobei bevorzugt die äußeren Kanäle 15, 18 zur Herstellung der oberen und unteren Schalen verwendet werden. Sämtliche der Kanäle 15, 16, 17, 18 können darüber hinaus temperaturgesteuert geregelt werden, sodass die unterschiedlichen Eigenschaften der Kunststoffmaterialien berücksichtigt werden können und deren Fließgeschwindigkeit beeinflussbar ist. Durch die Verbindung mehrerer Schmelzen in einem Düsenkörper 2 und die entsprechende Ausbildung der Düsenlippe 4 besteht somit die Möglichkeit eine Hohlkammerscheibe, wie sie beispielsweise aus Figur 2 ersichtlich ist, in einem Extrudiervorgang herzustellen, wobei einzelne Stege, Stegabschnitte und/oder Schalen mit unterschiedlichen Kunststoffmaterialien herstellbar sind.

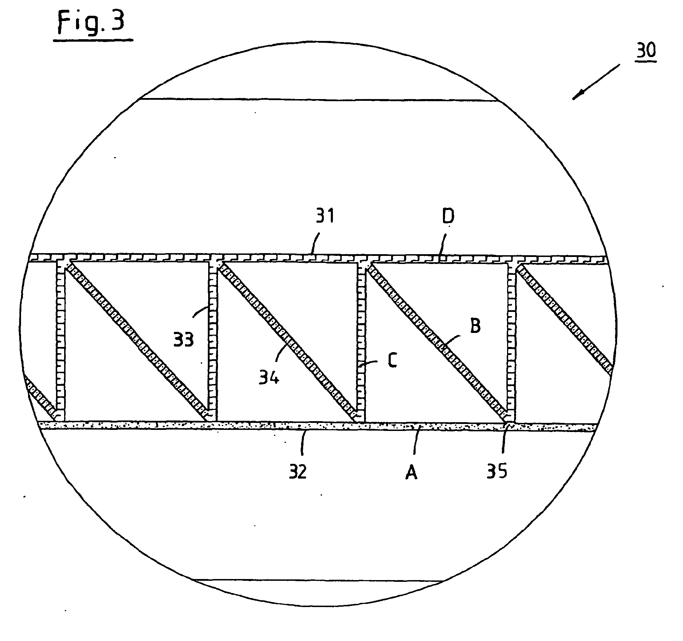

Figur 3 zeigt exemplarisch eine Ausführung einer Hohlkammerscheibe 30 in einer Ausschnittvergrößerung mit einer oberen Schale 31 und einer unteren Schale 32 sowie senkrecht hierzu angeordneten Stegen 33, die darüber hinaus durch diagonal verlaufende Stege 34 in ihrem jeweiligen Fußpunkt 35 miteinander verbunden sind. Im gezeigten Ausführungsbeispiel sind die verschiedenen Stege 33, 34, Stegabschnitte und Schalen 31, 32 mit einer unterschiedlichen Straffur dargestellt, die den verschiedenen Schmelzen A, B, C, D gemäß Figur 1 entsprechen. In dem gezeigten Ausführungsbeispiel sind hierbei die äußeren Schalen 31, 32 durchgehend aus einem Kunststoffmaterial ausgebildet, dies gilt ebenso für die senkrechten Stege 33 und die diagonal verlaufenden Stege 34. Es besteht jedoch ohne Weiteres die Möglichkeit, die vorhandenen Schlitze zur Erzeugung der Stege 33, 34, Stegabschnitte oder Schalen 31, 32 über die Verbindungskanäle im Düsenkern 21 jeweils einem anderen Schmelzkanal 15, 16 , 17, 18 zuzuweisen, sodass beispielsweise die äußeren Schalen 31, 32 zwischen jeweils zwei benachbarten senkrechten Stegen 33 eine andere Struktur oder Einfärbung aufweisen. Alternativ besteht die Möglichkeit die senkrecht verlaufenen Stege 33 oder diagonal verlaufenden Stege 34 wechselweise oder abschnittsweise mit einer anderen Schmelze A, B, C oder D zu versorgen.

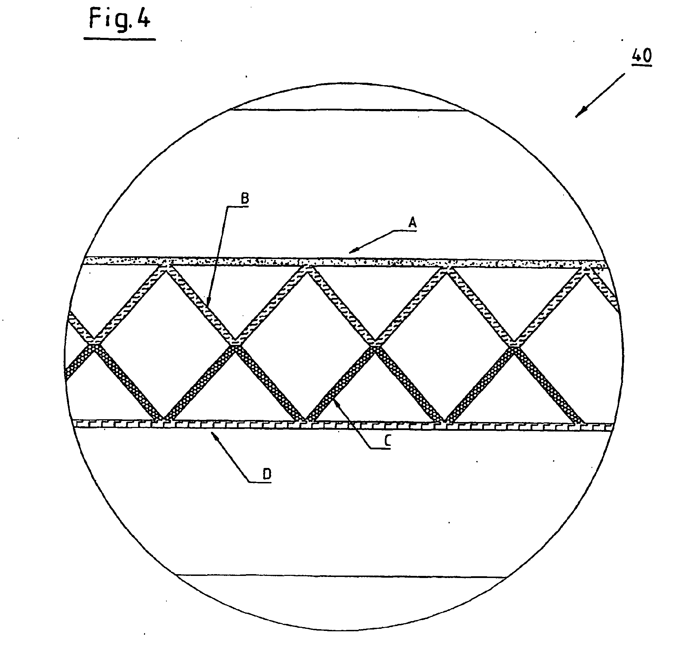

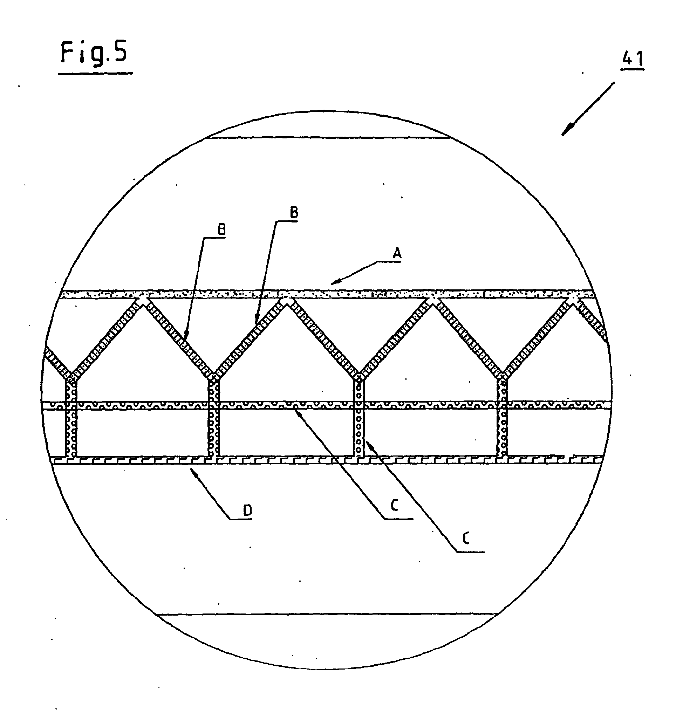

Figur 4 und 5 zeigen weitere Ausführungen einer Hohlkammerscheibe 40, 41 in einer Ausschnittvergrößerung, bei denen für die Ausbildung der X- beziehungsweise Y-Struktur verschiedene Schmelzen A, B, C oder D verwendet werden. Die in den Figuren 2 bis 3 gezeigten Ausführungsbeispiele verdeutlichen nur, welche Formen möglich sind, ohne dass diese einschränkend zu verstehen sind. Selbstverständlich können abweichende Formen hergestellt werden, die im Weiteren auch durch weitere parallel verlaufende Schalen verstärkt sind.

Das erfindungsgemäße Werkzeug ermöglicht somit die wahlfreie Ausbildung vorhandener Stege, Stegabschnitte oder Schalen mit einem anderen Kunststoffmaterial, welches beispielsweise eingefärbt sein kann oder aufgrund einer anderen Materialzusammensetzung besondere Eigenschaften aufweist. Die Gestaltungsmöglichkeiten sind äußert vielfach und werden durch die Zuordnung der einzelnen Kanäle 15, 16, 17, 18 mit den Schlitzen im Düsenkopf 4 festgelegt, wobei die hergestellte innere Struktur der Hohlkammerscheibe 30 beliebig ausgebildet sein kann.

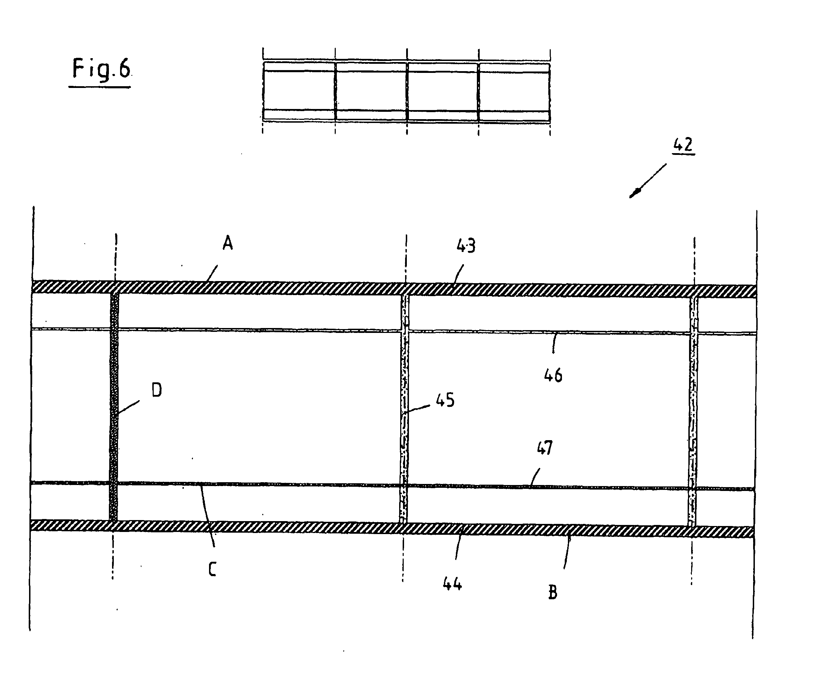

Figur 6 zeigt eine weitere Ausführungsform einer Hohlkammerscheibe 42 mit einer rechteckförmigen Grundstruktur, bei der die außenliegenden Schalen 43, 44 durch senkrecht angeordnete Stege 45 miteinander verbunden sind und die einzelnen Stege 45 jeweils durch eine weitere innenliegende Schale 46, 47 verstärkt sind, wobei die innenliegenden Schalen 46, 47 eine wesentlich dünnere Struktur aufweisen als die außenliegenden Schalen 43, 44. In einer nach dem erfindungsgemäßen Verfahren hergestellten Hohlkammerscheibe 42 ist die Außenschale 43 durch eine Schmelze A und die Außenschale 44 durch eine Schmelze B und die Innenschalen 46, 47 durch eine Schmelze C und die Stege 45 durch eine Schmelze D hergestellt.

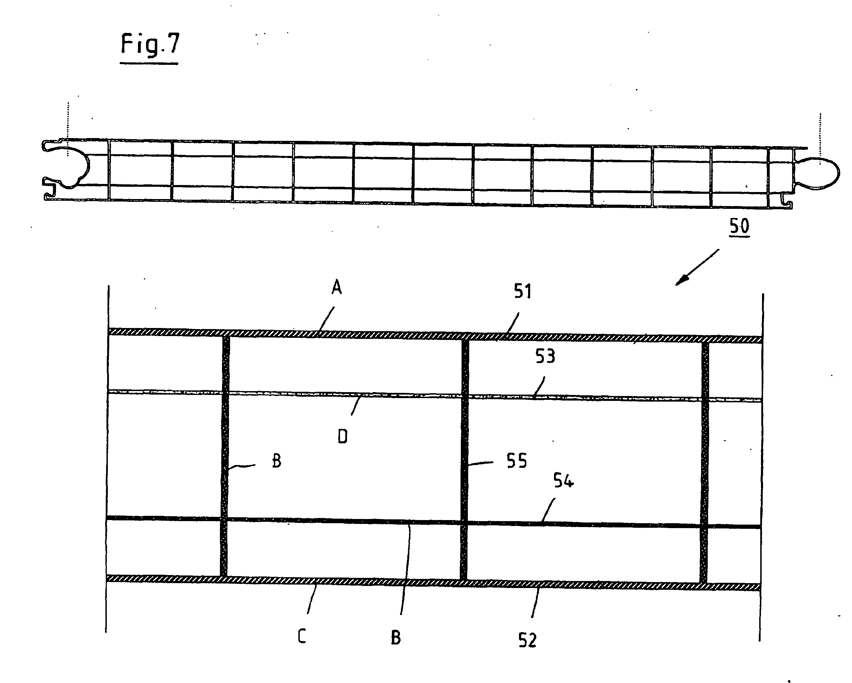

Figur 7 zeigt ebenfalls eine rechteckförmige Struktur einer Hohlkammerscheibe 50, bestehend aus zwei außenliegenden Schalen 51, 52 und zwei innenliegenden Schalen 53, 54, die durch Stege 55 miteinander verbunden sind. Gegenüber der Ausführungsform gemäß Figur 5 ist jedoch eine andere Materialzusammensetzung der einzelnen Schalen und Stege erfolgt, und zwar ist die Außenschale 51 durch eine Schmelze A, die Außenschale 52 durch eine Schmelze C und die Innenschalen 53, 54 durch eine Schmelze D beziehungsweise B hergestellt worden, während demgegenüber die Stege 55 durch eine Schmelze B hergestellt sind.

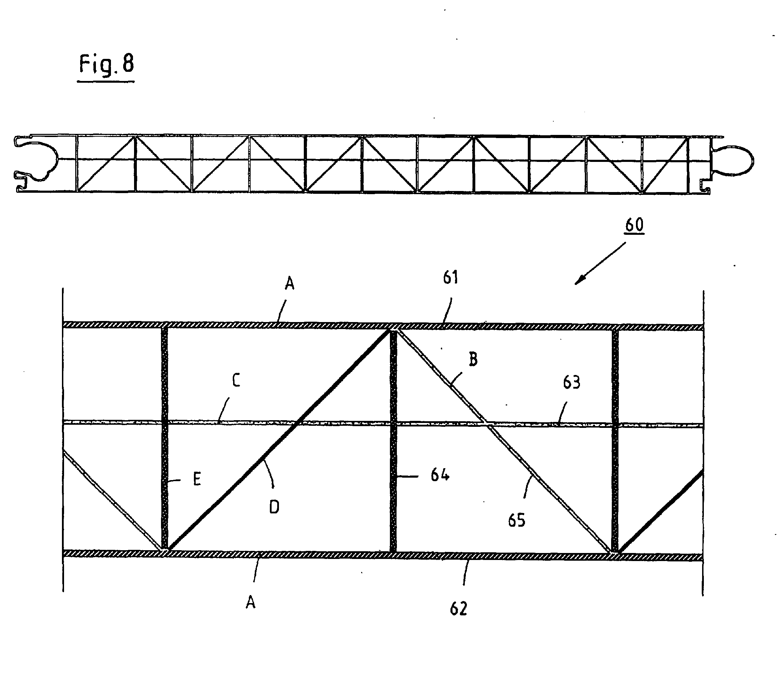

Figur 8 zeigt eine Hohlkammerscheibe 60, mit außenliegenden Schalen 61, 62, einer innenliegenden Schale 63 sowie Querstege 64 und zusätzlichen Diagonalstegen 65. Die Gesamtstruktur ist hierbei so ausgebildet, dass neben der rechteckförmigen Grundstruktur eine zusätzliche V-förmige Struktur entsteht. Im gezeigten Ausführungsbeispiel wird hierbei die Außenschale 61, 62 durch eine Schmelze A, die Innenschale 63 durch eine Schmelze C hergestellt, während die Querstege 64 durch eine Schmelze E und die Diagonalstege 65 durch eine Schmelze B beziehungsweise D hergestellt sind.

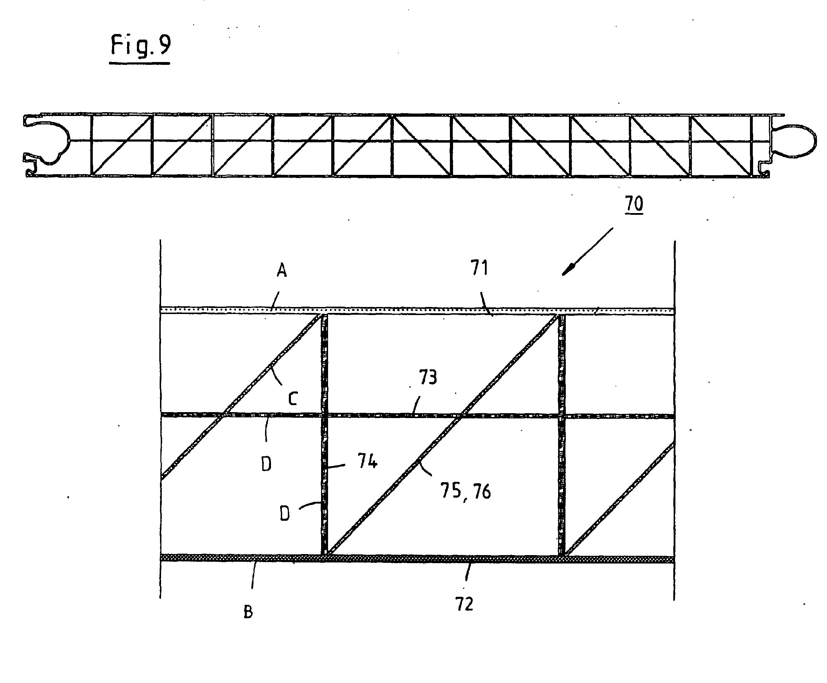

Figur 9 zeigt demgegenüber eine Hohlkammerscheibe 70 mit Außenschalen 71, 72 und einer Innenschale 73, die durch Stege 74 und Diagonalstege 75 verstärkt ist. Die Grundstruktur dieser Hohlkammerscheibe 70 setzt sich aus einer mittigen V-förmigen Anordnung der Querstege 75 und nach links und rechts auslaufenden Diagonalstegen 76 fort. Die Außenschale 71 ist aus einer Schmelze A und die Außenschale 72 aus einer Schmelze B entstanden, während die Innenschale 73 und die Stege 74 durch eine Schmelze D und die Querstege 75 und Diagonalstege 76 durch eine Schmelze C entstanden sind.

### Bezugszeichenliste

- 1: Düsenkopf
- 2: Düsenkörper
- 3: Flanschansatz
- 4: Düsenlippe
- 5: Anschlussflansch
- 6: Anschlussflansch
- 7: Befestigungsbolzen
- 8: Nut
- 9: Nut
- 10: Einstellschraube
- 11: Einstellschraube
- 12: Flanschansatz
- 13: Flanschansatz
- 14: Befestigungsbolzen
- 15: Kanal
- 16: Kanal
- 17: Kanal
- 18: Kanal
- 19: Befestigungsbolzen
- 20: Verbindungskanal
- 21: Düsenkem
- 22: Austrittsbereich
- 23: Schlitz
- 24: Befestigungsbolzen
- 30: Hohlkammerplatte
- 31: Schale
- 32: Schale
- 33: Steg
- 34: Steg
- 35: Fußpunkt
- 40: Hohlkammerscheibe
- 41: Hohlkammerscheibe
- 42: Hohlkammerscheibe
- 43: Schale
- 44: Schale
- 45: Steg
- 46: Schale
- 47: Schale
- 50: Hohlkammerscheibe
- 51: Schale
- 52: Schale
- 53: Innenschale
- 54: Innenschale
- 55: Steg
- 60: Hohlkammerscheibe
- 61: Schale
- 62: Schale
- 63: Schale
- 64: Quersteg
- 65: Diagonalsteg
- 70: Hohlkammerscheibe
- 71: Außenschale
- 72: Außenschale
- 73: Innenschale
- 74: Steg
- 75: Quersteg
- 76: Diagonalsteg

- A: Schmelze
- B: Schmelze
- C: Schmelze
- D: Schmelze

## Patentansprüche

1. Verfahren zur Herstellung eines plattenförmigen Wand- oder Dachelementes aus stranggepresstem, insbesondere teilweise lichtdurchlässigem, Kunststoff, welches aus mindestens zwei mit Abstand zueinander angeordneten und durch mehrere Stege (33, 34, 45, 55, 74) miteinander verbundenen Schalen (31, 32, 43, 44, 46, 47, 51, 52, 61, 62, 63, 71, 72, 73) besteht, mit Hilfe eines Strangpresswerkzeuges, dessen Düsenlippe (4) ein dem Querschnitt des Wand- oder Dachelementes entsprechendes Profil aufweist, wobei einzelne Profilabschnitte durch einen Schlitz der Düsenlippe (4) gebildet werden,
**dadurch gekennzeichnet,**
**dass** mehrere unterschiedliche Kunststoffmaterialien dem Strangpresswerkzeug von der diametral gegenüberliegenden Seite der Düsenlippe (4) getrennt zugeführt werden und ausgewählte Schlitze (23) für Stege (33, 34, 45, 55, 74), Stegabschnitte und/oder Schalen (31, 32, 43, 44, 46, 47, 51, 52, 61, 62, 63, 71, 72, 73) mit den Kunststoffmaterialien versorgt werden, wobei die unterschiedlichen Kunststoffmaterialien in den Schlitzen (23) der Düsenlippe (4) zusammenfließen.

2. Verfahren nach Anspruch 1,
**dadurch gekennzeichnet,**
**dass** mehrere Extruder mit dem Strangpresswerkzeug verbunden werden, die die unterschiedlichen Kunststoffmaterialien zuführen.

3. Verfahren nach Anspruch 1 oder 2,
**dadurch gekennzeichnet,**
**dass** gleichartige Schlitze (23) untereinander verbunden sind und durch jeweils einen Extruder versorgt werden.

4. Verfahren nach Anspruch 1, 2 oder 3,
**dadurch gekennzeichnet,**
**dass** über eine Strömungsregulierung die Wandstärke der Stege (33, 34, 45, 55, 74) und Schalen (31, 32, 43, 44, 46, 47, 51, 52, 61, 62, 63, 71, 72, 73) beeinflusst wird.

5. Verfahren nach einem oder mehreren der Ansprüche 1 bis 4,
**dadurch gekennzeichnet,**
**dass** die Schalen (31, 32, 43, 44, 46, 47, 51, 52, 61, 62, 63, 71, 72, 73) und/oder Stege (33, 34, 45, 55, 74) vollflächig durchgefärbt werden und/oder aus einer abweichenden Materialzusammensetzung bestehen.

6. Verfahren nach einem oder mehreren der Ansprüche 1 bis 5,
**dadurch gekennzeichnet,**
**dass** beim Strangpressen die Schalen (31, 32, 43, 44, 46, 47, 51, 52, 61, 62, 63, 71, 72, 73) und/oder Stege (33, 34, 45, 55, 74) aus einer UV-Licht oder Infrarot-Licht absorbierenden Kunststoffmasse geformt werden oder dass lumineszierende oder phosphoreszierende Stoffe der Kunststoffmasse hinzugefügt werden oder dass feuertechnische oder brandhemmende Eigenschaften durch entsprechende Materialauswahl erzielt werden.

7. Werkzeug zur Anwendung des Verfahrens nach einem oder mehreren der Ansprüchen 1 bis 6, zur Herstellung eines plattenförmigen Wand- oder Dachelementes aus stranggepresstem Kunststoffmaterial, welches aus mindestens zwei mit Abstand zueinander angeordneten und durch mehrere Stege (33, 34, 45, 55, 74) miteinander verbundenen Schalen (31, 32, 43, 44, 46, 47, 51, 52, 61, 62, 63, 71, 72, 73) besteht, mit Hilfe eines Strangpresswerkzeug, dessen Düsenlippe (4) ein dem Querschnitt des Wand- oder Dachelementes entsprechendes Profil aufweist, wobei einzelne Profilabschnitte durch einen Schlitz der Düsenlippe (4) herstellbar sind,
**dadurch gekennzeichnet,**
**dass** ausgewählte Schlitze (23) für Stege (33, 34, 45, 55, 74), Stegabschnitte und/oder Schalen (31, 32, 43, 44, 46, 47, 51, 52, 61, 62, 63, 71, 72, 73) im Düsenkern (21) untereinander verbunden und von zumindest einem weiteren Extruder beaufschlagbar sind, wobei Kunststoffmaterialien aus verschiedenen Extrudern im Strangpresswerkzeug von der der Düsenlippe (4) gegenüber liegenden Seite getrennt zuführbar sind und die Kunststoffmaterialien in den Schlitzen (23) der Düsenlippe (4) zusammen fließen.

8. Werkzeug, nach Anspruch 7,
**dadurch gekennzeichnet,**
**dass** mehrere Extruder an das Strangpresswerkzeug angeschlossen und über Verteilungskanäle gleiche oder gleichartige Schlitze (23) mit Kunststoffmaterialien versorgbar sind.

9. Werkzeug, nach Anspruch 7 oder 8,
**dadurch gekennzeichnet,**
**dass** die Strömung der Kunststofftnaterialien von den Extrudern zu der Düsenlippe (4) jeweils durch eine Strömungsregulierung beeinflussbar sind.

10. Werkzeug, nach einem oder mehreren der Ansprüche 7 bis 9,
**dadurch gekennzeichnet,**
**dass** ein den Extrudern zugeordneter Düsenkopf (1) eine Düsenlippe (4) aufweist, welche durch Schlitze (23) ein dem Wand- oder Dachelement entsprechendes Profil ausbildet und mit nebeneinanderliegenden in das Profil mündenden Verbindungskanälen (10) eines Düsenkerns (21) verbunden sind.

11. Werkzeug, nach einem oder mehreren der Ansprüche 7 bis 10,
**dadurch gekennzeichnet,**
**dass** die Verbindungskanäle (20) und/oder Verteilungskanäle unmittelbar Bestandteil des Düsenkerns (21) sind.

12. Werkzeug, nach einem oder mehreren der Ansprüche 7 bis 11,
**dadurch gekennzeichnet,**
**dass** die Kanäle (15, 16, 17, 18), die Verbindungskanäle (20) und/oder Verteilungskanäle vorheizbar sind, wobei die jeweilige Temperatur gegebenenfalls für die unterschiedlichen Kunststoffmaterialien getrennt einstellbar ist und durch geringe Druckvariation der zugeführten Kunststoffmaterialien die Ausbildung der Hohlkammerscheiben beeinflussbar ist.

13. Wand- oder Dachelemente aus stranggepressten Kunststoffmaterial, welches aus mindestens zwei mit Abstand zueinander angeordneten und durch Stege (33, 34, 45, 55, 74) miteinander verbundenen Schalen (31, 32, 43, 44, 46, 47, 51, 52, 61, 62, 63, 71, 72, 73) besteht, welches mit Hilfe eines Strangpresswerkzeuges herstellbar ist, dessen Düsenlippe (4) ein dem Querschnitt des Wand- oder Dachelementes entsprechendes Profil bilden, wobei einzelne Profilabschnitte durch einen Schlitz (23) der Düsenlippe (4) herstellbar sind,
**dadurch gekennzeichnet,**
**dass** die ausgebildeten Stege (33, 34, 45, 55, 74), Stegabschnitte und/oder Schalen (31, 32, 43, 44, 46, 47, 51, 52, 61, 62, 63, 71, 72, 73) aus vollflächig durchgefärbt und aus unterschiedlichen Kunststoffmaterialien bestehen, welche getrennt durch Extruder von der diametral gegenüber liegenden Rückseite der Düsenlippe (4) zuführbar sind.

14. Wand- oder Dachelemente nach Anspruch 13,
**dadurch gekennzeichnet,**
**dass** zumindest eine Schale (31, 32, 43, 44, 46, 47, 51, 52, 61, 62, 63, 71, 72, 73) und/oder eine Anzahl von Stegen (33, 34, 45, 55, 74) eine von den übrigen Schalen (31, 32, 43, 44, 46, 47, 51, 52, 61, 62, 63, 71, 72, 73) abweichende Struktur, Materialzusammensetzung und/oder Einfärbung aufweist.

15. Wand- oder Dachelemente nach Anspruch 13 oder 14,
**dadurch gekennzeichnet,**
**dass** wenigstens eine der außenliegenden Schalen (31, 32, 43, 44, 46, 47, 51, 52, 61, 62, 63, 71, 72, 73) und/oder zumindest eine mittige Schale (31, 32, 43, 44, 46, 47, 51, 52, 61, 62, 63, 71, 72, 73) eine Abweichung der Struktur, Materialzusammensetzung und/oder Einfärbung aufweist.

16. Wand- oder Dachelemente nach Anspruch 13, 14 oder 15,
**dadurch gekennzeichnet,**
**dass** mehrere, vorzugsweise zwei bis sechs, Schalen (31, 32, 43, 44, 46, 47, 51, 52, 61, 62, 63, 71, 72, 73) übereinanderliegend durch Stege (33, 34, 45, 55, 74) einstückig miteinander verbunden sind, die in der Materialzusammensetzung voneinander abweichen.

17. Wand- oder Dachelemente nach einem oder mehreren der Ansprüchen 14 bis 16,
**dadurch gekennzeichnet,**
**dass** zur Einfärbung der Schalen (31, 32, 43, 44, 46, 47, 51, 52, 61, 62, 63, 71, 72, 73) Farbpigmente einsetzbar sind, welche beispielsweise Infrarot- oder UV-Strahlen in erhöhtem Maße reflektieren oder absorbieren oder dass lumineszierende oder phosphoreszierende Stoffe der Kunststoffmasse beigefügt sind oder dass feuertechnische oder brandhemmende Eigenschaften durch entsprechende Materialauswahl vorliegen.

18. Wand- oder Dachelemente nach einem oder mehreren der Ansprüchen 14 bis 17,
**dadurch gekennzeichnet,**
**dass** die Oberfläche zumindest einer Schale (31, 32, 43, 44, 46, 47, 51, 52, 61, 62, 63, 71, 72, 73) durch die Zugabe von Strukturmitteln zum Grundmaterial veränderbar ist, wobei die Oberfläche zu einer oder beiden Seiten der Schale (31, 32, 43, 44, 46, 47, 51, 52, 61, 62, 63, 71, 72, 73) eine aufgerauhte Fläche aufweist.

19. Wand- oder Dachelemente nach einem oder mehreren der Ansprüchen 14 bis 18,
**dadurch gekennzeichnet,**
**dass** die Aufrauung sichtbar feinporig ausgeführt ist.

20. Wand- oder Dachelemente nach einem oder mehreren der Ansprüchen 14 bis 19,
**dadurch gekennzeichnet,**
**dass** die zumindest eine Schale (31, 32, 43, 44, 46, 47, 51, 52, 61, 62, 63, 71, 72, 73) durch Strukturmittel eine andere Oberflächenstruktur, beispielsweise marmor-, holzartig oder dergleichen aufweist.

## Claims

1. Method for manufacturing a plate-like wall or roof element of extruded, in particular partially transparent, plastics, consisting of at least two shells (31, 32, 43, 44, 46, 47, 51, 52, 61, 62, 63, 71, 72, 73) arranged at a distant to one another and interconnected by means of several webs (33, 34, 45, 55, 74), by means of an extrusion die, the nozzle lip (4) of which has a profile corresponding to the cross-section of the wall or roof element, individual profile sections being formed by a slit of the nozzle lip (4),
**characterized in that**
several different plastic materials are separately supplied to the extrusion die from the diametrically opposite side of the nozzle lip (4), and selected slits (23) for webs (33, 34, 45, 55, 74), web sections and/or shells (31, 32, 43, 44, 46, 47, 51, 52, 61, 62, 63, 71, 72, 73) are provided with the plastic materials, the different plastic materials flowing together in the slits (23) of the nozzle lip (4).

2. Method according to claim 1,
**characterized in**
**that** several extruders supplying the different plastic materials are connected to the extrusion die.

3. Method according to claim 1 or 2,
**characterized in**
**that** similar slits (23) are interconnected and supplied by one extruder each.

4. Method according to claim 1, 2, or 3
**characterized in**
**that** the wall thickness of the webs 33 34, 45, 55, 74) and shells (31, 32, 43, 44, 46, 47, 51, 52, 61, 62, 63, 71, 72, 73) is influenced via a flow regulator.

5. Method according to one or more of claims 1 to 4,
**characterized in**
**that** the shells (31, 32, 43, 44, 45, 47, 51, 52, 61, 62, 63, 71, 72, 73) and/or webs (33, 34, 45, 55, 74) are all-over coloured and/or consist of a differing material composition.

6. Method according to one or more of claims 1 to 5,
**characterized in**
**that** during extrusion, the shells (31, 32, 43, 44, 46, 47, 51, 52, 61, 62, 63, 71, 72, 73) and/or webs (33, 34, 45, 55, 74) are shaped from a UV-light or infrared light absorbing plastic mass, or that luminescent or phosphorescent substances are added to the plastic mass, or that fire-technical or fire-resisting properties are achieved by a corresponding material choice.

7. Tool for the application of the method according to one or more of claims to 6 for the manufacture of a plate-like wall or roof element of extruded plastic material, consisting of at least two shells (31, 32, 43, 44, 46, 47, 51, 52, 61, 62, 63, 71, 72, 73) arranged at a distant to one another and interconnected by means of several webs (33, 34, 45, 55, 74), by means of an extrusion die, the nozzle lip (4) of which has a profile corresponding to the cross-section of the wall or roof element, wherein individual profile sections can be made by a slit of the nozzle lip (4),
**characterized in**
**that** selected slits (23) for webs (33, 34, 45, 55, 74), web sections and/or shells (31, 32, 43, 44, 46, 47, 51, 52, 61, 62, 63, 71, 72, 73) are interconnected in the nozzle core (21), and at least one further extruder can act upon them, wherein plastic materials of various extruders in the extrusion die can be separately supplied from the side opposite the nozzle lip (4) and the plastic materials flow together in the slits (23) of the nozzle lip (4).

8. Tool according to claim 7,
**characterized in**
**that** several extruders can be connected to the extrusion die and the same or similar slits (23) can be provided with plastic materials via distribution channels.

9. Tool according to claim 7 or 8,
**characterized in**
**that** the flow of the plastic materials from the extruders to the nozzle lip (4) can each be influenced by a flow regulator.

10. Tool according to one of claims 7 to 9,
**characterized in**
**that** a nozzle head (1) associated to the extruders comprises a nozzle lip (4) which forms a profile corresponding to the wall or roof element by slits (23) and is connected with adjacent communication channels (10) of a nozzle core (21) ending in the profile.

11. Tool according to one or more of claims 7 to 10,
**characterized in**
**that** the communication channels (20) and/or the distribution channels are directly a component of the nozzle core (21).

12. Tool according to one or more of claims 7 to 11,
**characterized in**
**that** the channels (15, 16, 17, 18), the communication channels (20) and/or distribution channels can be preheated, wherein the respective temperature can be optionally adjusted separately for the various plastic materials, and by a slight pressure variation of the supplied plastic materials the formation of the hollow-chamber plates can be influenced.

13. Wall or roof elements of extruded plastic material consisting of at least two shells (31, 32, 43, 44, 46, 47, 51, 52, 61, 62, 63, 71, 72, 73) arranged at a distant to one another and interconnected by means of webs (33, 34, 45, 55, 74), which can be manufactured by means of an extrusion die, the nozzle lip (4) of which has a profile corresponding to the cross-section of the wall or roof element, wherein individual profile sections can be manufactured by a slit (23) of the nozzle lip (4),
**characterized in that**
the formed webs (33, 34, 45, 55, 74), web sections and/or shells (31, 32, 43, 44, 46, 47, 51, 52, 61, 62, 63, 71, 72, 73) consist of differing plastic materials which are all-over coloured and which can be supplied separately through extruders from the diametrically opposite backside of the nozzle lip (4).

14. Wall or roof elements according to claim 13,
**characterized in**
**that** at least one shel (31, 32, 43, 44, 46, 47, 51, 52, 61, 62, 63, 71, 72, 73) and/or a number of webs (33, 34, 45, 55, 74) has a structure, material composition and/or colour different from the other shells (31, 32, 43, 44, 46, 47, 51, 52, 61, 62, 63, 71, 72, 73).

15. Wall or roof elements according to claim 13 or 14,
**characterized in**
**that** at least one of the outer shells (31, 32, 43, 44, 46, 47, 51, 52, 61, 62, 63, 71, 72, 73) and/or at least one central shell (31, 32, 43, 44, 46, 47, 51, 52, 61, 62, 63, 71, 72, 73) has a different structure, material composition and/or colour.

16. Wall or roof elements according to claim 13, 14 or 15,
**characterized in**
**that** several, preferably two to six, shells (31, 32, 43, 44, 46, 47, 51, 52, 61, 62, 63, 71, 72, 73) are integrally interconnected by webs (33, 34, 45, 55, 74) in an overlapping manner, the webs having differing material compositions.

17. Wall or roof elements according to one or more of claims 14 to 16,
**characterized in**
**that** for colouring the shells (31, 32, 43, 44, 46, 47, 51, 52, 61, 62, 63, 71, 72, 73), colour pigments can be employed which, for example, reflect or absorb infrared or UV rays to an increased degree, or that luminescent or phosphorescent substances are added to the plastic mass, or that fire-technical or fire-resistant properties are provided by a corresponding material choice.

18. Wall or roof elements according to one or more of claims 14 to 17,
**characterized in**
**that** the surface of at least one shell (31, 32, 43, 44, 46, 47, 51, 52, 61, 62, 63, 71, 72, 73) can be changed by adding structural agents to the basic material, the surface comprising a roughened face at one or both sides of the shell (31, 32, 43, 44, 46, 47, 51, 52, 61, 62, 63, 71, 72, 73).

19. Wall or roof elements according to one or more of claims 14 to 18,
**characterized in**
**that** the roughening is visibly fine-pored.

20. Wall or roof elements according to one or more of claims 14 to 19,
**characterized in**
**that** the at least one shell (31, 32, 43, 44, 46, 47, 51, 52, 61, 62, 63, 71, 72, 73) has a different surface structure, for example, a marble- or wood-like structure or the like, due to structural agents.

## Revendications

1. Procédé de fabrication d'un élément de toit ou de paroi en forme de plaques en matière synthétique extrudée, en particulier partiellement translucide, composé d'au moins deux coques (31, 32, 43, 44, 46, 47, 51, 52, 61, 62, 63, 71, 72, 73) disposées à distance les unes des autres et reliées par plusieurs âmes (33, 34, 45, 55, 74), à l'aide d'une filière d'extrusion dont la lèvre de buse (4) présente un profil correspondant à la coupe transversale de l'élément de toit ou de paroi, les différentes âmes profilées étant formées par une fente! de la lèvre de buse (4),
**caractérisé par le fait que** plusieurs matériaux différents en matière synthétique sont admis séparément à la filière d'extrusion par le côté diamétralement opposé de la lèvre de buse (4) et que les fentes (23) choisies pour des âmes (33, 34, 45, 55, 74), sections d'âmes et/ou coques (31, 32, 43, 44, 46, 47, 51, 52, 61, 62, 63, 71, 72, 73) sont alimentées en matériaux en matière synthétique, les différents matériaux en matière synthétique confluant dans les fentes (23) de la lèvre de buse (4).

2. Procédé selon la revendication 1,
**caractérisé par le fait que** plusieurs extrudeuses sont reliées à la filière d'extrusion admettant les matériaux synthétiques.

3. Procédé selon la revendication 1 ou 2,
**caractérisé par le fait que** des fentes similaires (23) sont reliées entre elles et que chacune est alimentée par une extrudeuse.

4. Procédé selon la revendication 1, 2 ou 3,
**caractérisé par le fait que** la régulation de l'écoulement influe sur l'épaisseur de paroi des âmes (33, 34, 45, 55, 74) et des coques (31, 32, 43, 44, 46, 47, 51, 52, 61, 62, 63, 71, 72, 73).

5. Procédé selon une ou plusieurs des revendications 1 à 4,
**caractérisé par le fait que** les coques (31, 32, 43, 44, 46, 47, 51, 52, 61, 62, 63, 71, 72, 73) et/ou les âmes (33, 34, 45, 55, 74) sont teintées sur toute la surface et/ou sont composées d'un assemblage de matériaux différents.

6. Procédé selon une ou plusieurs des revendications 1 à 5,
**caractérisé par le fait que** lors de l'extrusion les coques (31, 32, 43, 44, 46, 47, 51, 52, 61, 62, 63, 71, 72, 73) et/ou les âmes (33, 34, 45, 55, 74) sont formées d'une masse de matière synthétique absorbant les rayons UV ou la lumière infrarouge ou que des matières luminescentes ou phosphorescentes de la ' masse de matière synthétique sont ajoutées ou que des qualités réfractaires ou à effet retardateur de feu sont obtenues par un choix de matériaux adaptés.

7. Outil pour l'application du procédé selon une ou plusieurs des revendications 1 à 6, pour la fabrication d'un élément de toit ou de paroi en forme de plaques en matière synthétique extrudée, composé d'au moins deux coques (31, 32, 43, 44, 46, 47, 51, 52, 61, 62, 63, 71, 72, 73) disposées à distance les unes des autres et reliées par plusieurs âmes (33, 34, 45, 55, 74), à l'aide d'une filière d'extrusion dont la lèvre de buse (4) présente un profil correspondant à la coupe transversale de l'élément de toit ou de paroi, les différentes âmes profilées étant réalisables par une fente de la lèvre de buse (4),
**caractérisé par le fait que** les fentes choisies (23) pour les âmes (33, 34, 45, 55, 74), sections d'âmes et/ou coques (31, 32, 43, 44, 46, 47, 51, 52, 61, 62, 63, 71, 72, 73) sont reliées entre elles dans le noyau de la buse (21) et peuvent être alimentées par au moins une autre extrudeuse, les matériaux synthétiques provenant de différentes extrudeuses dans la filière d'extrusion pouvant être admis séparément par le côté opposé à la lèvre de buse (4) et confluant dans les fentes (23) de la lèvre de buse (4).

8. Outil selon la revendication 7,
**caractérisé par le fait que** plusieurs extrudeuses sont reliées à la filière d'extrusion et que les fentes identiques ou similaires (23) peuvent être alimentées en matériaux synthétiques par l'intermédiaire de gaines de distribution.

9. Outil selon la revendication 7 ou 8,
**caractérisé par le fait qu'**une régulation d'écoulement peut influer sur l'écoulement des matériaux en matière synthétique des extrudeuses jusqu'à la lèvre de buse (4).

10. Outil selon une ou plusieurs des revendications 7 à 9,
**caractérisé par le fait qu'**une tête de buse (1) associée aux extrudeuses présente une lèvre de buse (4), formant par des fentes (23) un profil correspondant à l'élément de paroi ou de toit et étant reliée aux canaux de raccordement juxtaposés débouchant dans le profil (10) d'un noyau de buse (21).

11. Outil selon une ou plusieurs des revendications 7 à 10,
**caractérisé par le fait que** les canaux de raccordement (20) et/ou gaines de distribution sont des éléments directs du noyau de buse (21).

12. Outil selon une ou plusieurs des revendications 7 à 11,
**caractérisé par le fait que** les canaux (15, 16, 17, 18), les canaux de raccordement (20) et/ou gaines de distribution peuvent être préchauffés, la température pour les différents matériaux en matière synthétique pouvant être le cas échéant réglée séparément et la formation des plaques creuses pouvant être influencée par une faible variation de pression des matériaux synthétiques alimentés.

13. Éléments de paroi et de toit en matériaux synthétiques extrudés, comprenant au moins deux coques (31, 32, 43, 44, 46, 47, 51, 52, 61, 62, 63, 71, 72, 73) disposées à distance les unes des autres et reliées par plusieurs âmes (33, 34, 45, 55, 74), étant réalisables à l'aide d'une filière d'extrusion, dont les lèvres de buse (4) forment un profil correspondant à la coupe transversale de l'élément de toit ou de paroi, les différentes âmes profilées étant réalisables par une fente de la lèvre de buse (4),
**caractérisés par le fait que** les âmes (33, 34, 45, 55, 74), sections d'âmes et/ou coques (31, 32, 43, 44, 46, 47, 51, 52, 61, 62, 63, 71, 72,73) formées sont teintées sur toute la surface et sont composées d'un assemblage de matériaux en matière synthétique différents, pouvant être alimentés séparément par l'extrudeuse à partir de la face arrière diamétralement opposée de la lèvre de buse (4).

14. Éléments de paroi et de toit selon la revendication 13,
**caractérisés par le fait qu'**au moins une coque (31, 32, 43, 44, 46, 47, 51, 52, 61, 62, 63, 71, 72, 73) et/ou un certain nombre d'âmes (33, 34, 45, 55, 74) présentent une structure, un assemblage de matériaux et/ou teinte différente des autres coques (31, 32, 43, 44, 46, 47, 51, 52, 61, 62, 63, 71, 72, 73).

15. Éléments de paroi et de toit selon la revendication 13 ou 14,
**caractérisés par le fait qu'**au moins une des coques externes (31, 32, 43, 44, 46, 47, 51, 52, 61, 62, 63, 71, 72, 73) et/ou au moins une coque centrale (31, 32, 43, 44, 46, 47, 51, 52, 61, 62, 63, 71, 72, 73) présentant une différence de structure, de composition de matériaux et/ou de teinte.

16. Éléments de paroi et de toit selon la revendication 13, 14 ou 15,
**caractérisés par le fait que** plusieurs, de préférence deux à six, coques (31, 32, 43, 44, 46, 47, 51, 52, 61, 62, 63, 71, 72, 73) superposées sont reliées entre elles en une seule pièce par des âmes (33, 34, 45, 55, 74), se différenciant les unes des autres par la composition des matériaux.

17. Éléments de paroi et de toit selon une ou plusieurs revendications 14 à 16,
**caractérisés par le fait que** pour la teinture des coques (31, 32, 43, 44, 46, 47, 51, 52, 61, 62, 63, 71, 72, 73) des pigments de couleur peuvent être utilisés, qui par exemple réfléchissent ou absorbent dans une large mesure les rayons infrarouges ou UV ou que des matières luminescentes ou phosphorescentes sont ajoutées dans la masse des matériaux synthétiques ou que des caractéristiques réfractaires ou à effet retardateur de feu sont présentes.

18. Éléments de paroi et de toit selon une ou plusieurs revendications 14 à 17,
**caractérisés par le fait que** la surface d'au moins une coque (31, 32, 43, 44, 46, 47, 51, 52, 61, 62, 63, 71, 72, 73) est modifiable par d'adjonction de moyens structurels au matériau de base, la surface d'une ou deux faces de la coque (31, 32, 43, 44, 46, 47, 51, 52, 61, 62, 63, 71, 72, 73) présentant une surface rugueuse.

19. Éléments de paroi et de toit selon une ou plusieurs revendications 14 à 18,
**caractérisés par** la fait que la rugosité est visiblement exécutée à l'aide d'un matériau microporeux.

20. Eléments de toit ou de paroi selon une ou plusieurs revendications 14 à 19,
**caractérisés par le fait qu'**au moins une coque (31, 32, 43, 44, 46, 47, 51, 52, 61, 62, 63, 71, 72, 73) présente par sa constitution une structure de surface différente, par exemple du type marbre, bois ou équivalent.
